# EUROPEAN PATENT APPLICATION

(11) **EP 2 851 730 A1**
(43) Date of publication of application: **25.03.2015**
(21) Application number: 13184931.7
(22) Date of filing: 18.09.2013
(51) Int. Cl.: G02B 21/00, G02B 21/26, G02B 21/33, G02B 21/36, G02B 21/16, G02B 21/34

(54) **Sample holder for rotation of three-dimensional specimens in microscopy**

(71) Applicant: Hochschule Aalen, 73430 Aalen (DE)
(72) Inventor: Bruns, Thomas, 73430 Aalen (DE); Schneckenburger, Herbert, 73431 Aalen (DE); Schickinger, Sarah, 73430 Aalen (DE)
(74) Representative: Elbel, Michaela

(57) **Abstract**

The invention relates to a sample holder (1) for a microscope comprising a transparent outer reservoir (2) and a transparent inner tube (3), which is arranged in the outer reservoir (2) to be rotatable. The invention further relates to a method for observing a specimen (23), comprising placing a specimen (23) in an inner tube (3), placing the inner tube (3) in an outer reservoir (2), dispersing an immersion fluid (20), which has a refraction index corresponding to the refraction index of the inner tube (3), between the inner tube (3) and the outer reservoir (2), locating the outer reservoir (2) in the light path of a microscope, and rotating the inner tube (3) to observe the specimen (23) at any desired perspective. Additionally, the invention relates to a microscope stage adaptor and to the use of a sample holder (1) for obtaining images.

## Description

### Field of the invention

The invention relates to a sample holder for a microscope comprising a transparent outer reservoir and a transparent inner tube, which is arranged in the outer reservoir to be rotatable. The invention further relates to a method for observing a specimen, comprising placing a specimen in an inner tube, placing the inner tube in an outer reservoir, dispersing an immersion fluid, which has a refraction index corresponding to the refraction index of the inner tube, between the inner tube and the reservoir, locating the outer reservoir in the light path of a microscope, and rotating the inner tube to observe the specimen at any desired perspective. Additionally, the invention relates to a microscope stage adaptor and to the use of a sample holder for obtaining single plane images.

### Background of the invention

Microscopy became a well-established and commonly used tool in fields of scientific research, medical diagnosis and industrial quality management. Common microscopy, however, is usually limited to a 2D reproduction of mostly three-dimensional objects, as for example cells or tissue samples. Using fluorescent labeling and laser scanning microscopy, 3D reconstructions based on 2D images can be generated. By detecting the fluorescence signal from multiple single focal planes, a stack of images is recorded through the object. These images are then used for reconstructing the three-dimensional shape of the object. However, due to the necessary distance between the multiple focal planes, a significant amount of information is lost. Moreover, despite the scanning through the entire object, the perspective of observation is determined when embedding the object for microscopy and cannot be changed afterwards. In addition, 3D reconstruction using laser scanning microscopy (LSM) or single plane illumination microscopy (SPIM) is only available for transparent objects, greatly limiting the scope of these methods.

Therefore, means and methods for comprehensively observing a three-dimensional object using microscopy are required.

### Summary

In a first aspect, the invention relates to a sample holder for a microscope comprising a transparent outer reservoir, and a transparent inner tube, which is arranged in the outer reservoir to be rotatable, wherein an immersion fluid is dispersed between the inner tube and the outer reservoir and the immersion fluid has a refraction index corresponding to the refraction index of the inner tube.

In a further aspect, the invention relates to a method for observing a specimen, comprising placing a specimen in an inner tube, placing the inner tube in an outer reservoir, dispersing an immersion fluid, which has a refraction index corresponding to the refraction index of the inner tube, between the inner tube and the outer reservoir, locating the outer reservoir in the light path of a microscope, and rotating the inner tube to observe the specimen at any desired perspective.

In a further aspect, the invention relates to a microscope stage adaptor comprising an outer reservoir, which is fastened to a retainer, and an inner tube, which is arranged in the outer reservoir to be rotatable, wherein an immersion fluid, which has a refraction index corresponding to the refraction index of the inner tube, is dispersed between the inner tube and the outer reservoir.

In a further aspect, the invention relates to the use of a sample holder for obtaining single plane images.

### Brief description of the drawings

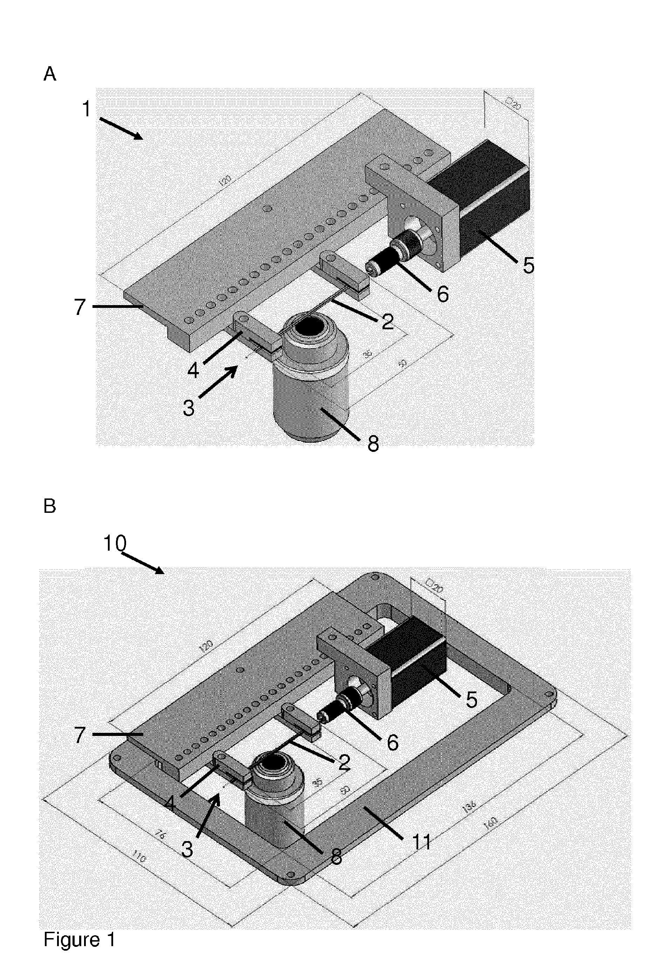

**Figure 1** shows exemplary constructions of the sample holder (1) and a microscope stage adaptor (10). The sample holder (1) is suitable for direct mounting to a xy-translation stage of a microscope (A) or to be included in a retainer (11) (B). The dimensions of the sample holder (1) and the microscope stage adaptor (10) are given in mm, but may be adjusted depending on the microscope used.

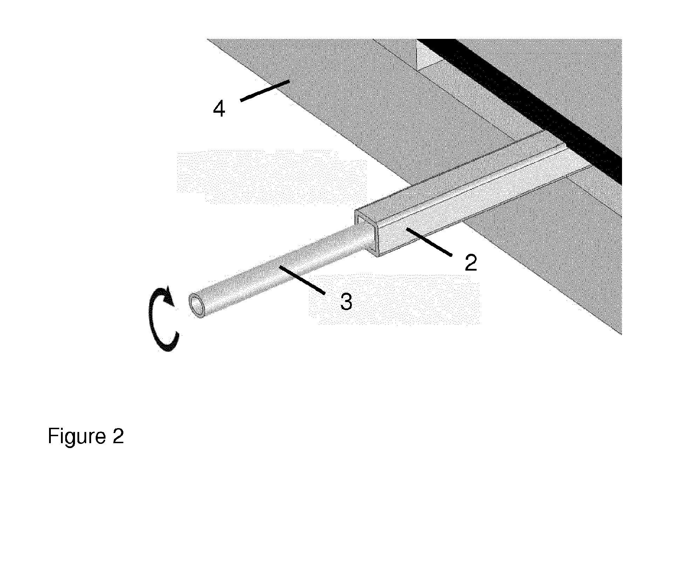

**Figure 2** shows a detail of the sample holder (1) depicting the inner tube (3), which is arranged in the outer reservoir (2) and can be rotated therein.

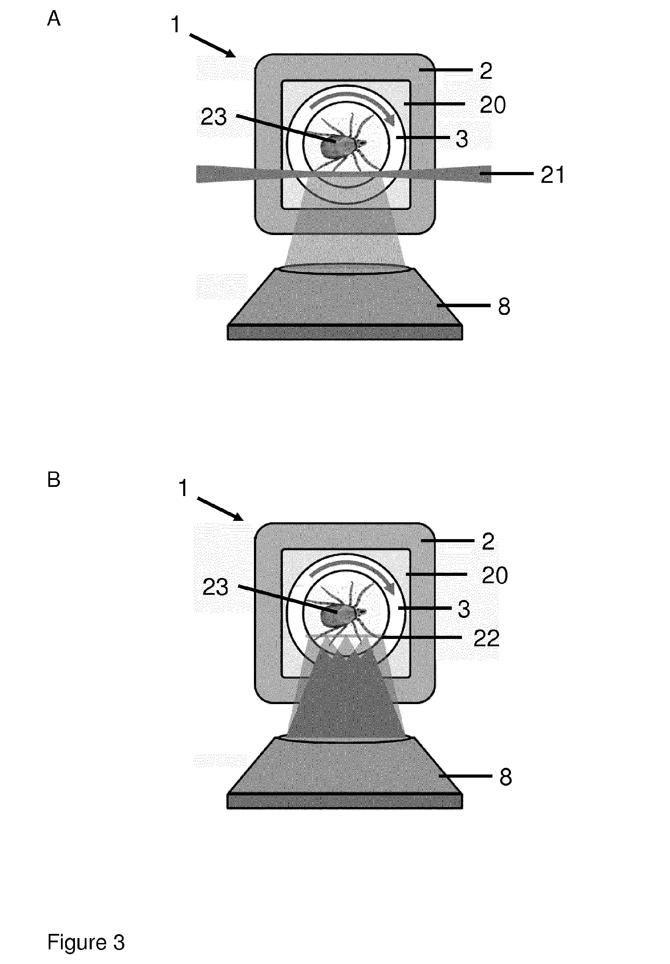

**Figure 3** shows schematic drawings depicting a sample holder (1) for the use in selective plane illumination microscopy (SPIM) (A) and laser scanning microscopy (LSM) (B).

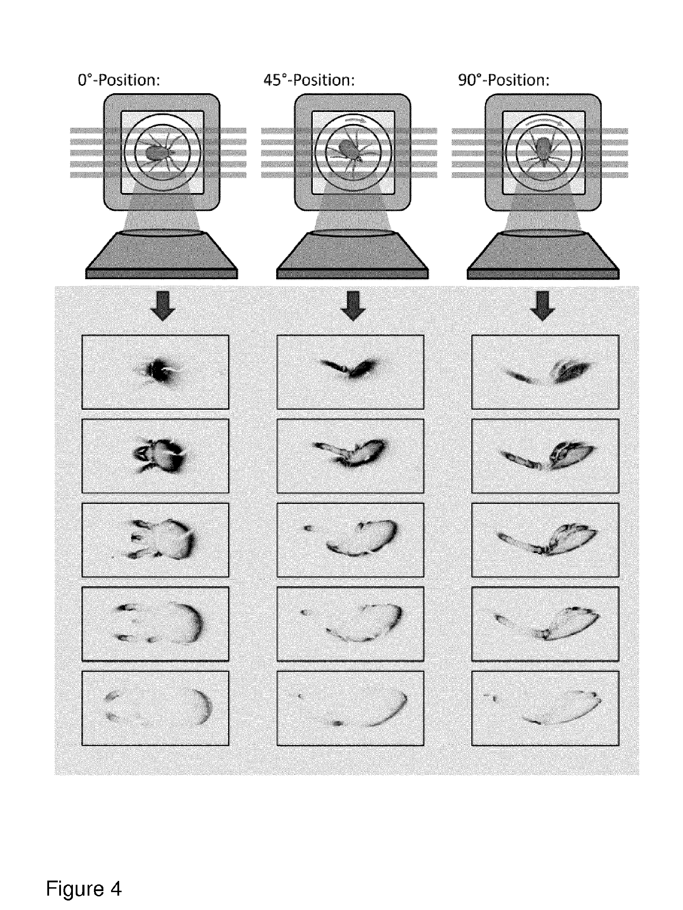

**Figure 4** schematically depicts the approach for imaging a tick larva from three different perspectives and the images obtained by scanning through the object.

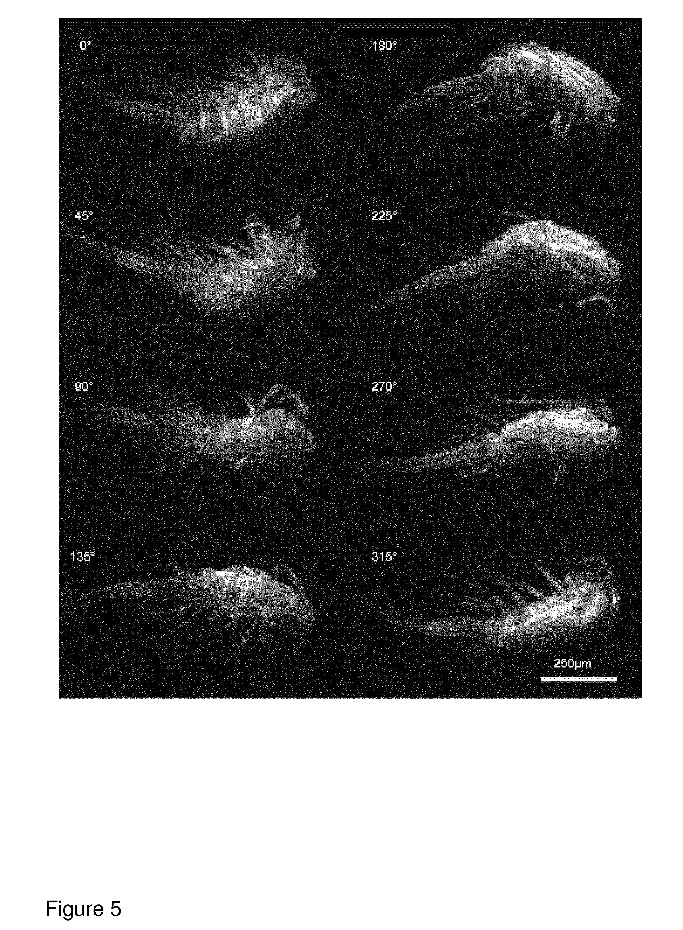

**Figure 5** shows fluorescence z-projection images of 8 single rotation steps of a copepod incubated with acridine orange (10 µM, 30 min) taken by single plane illumination microscopy. Light incidence from top to bottom (excitation wavelength: 470 nm; fluorescence detected at λ ≥ 515 nm; each z-stack: Δz = 5 µm, 80 images).

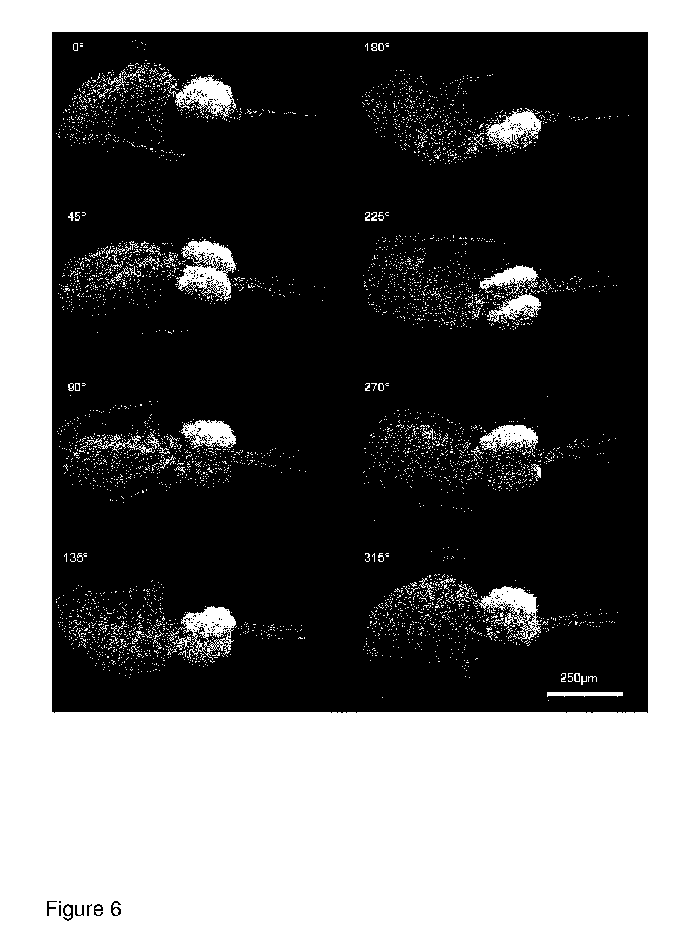

**Figure 6** shows fluorescence z-projection images of 8 single rotation steps of a copepod with egg sac incubated with acridine orange (10 µM, 30 min) taken by single plane illumination microscopy. Light incidence from top to bottom (excitation wavelength: 470 nm; fluorescence detected at λ ≥ 515 nm; each z-stack: Δz = 5 µm, 80 images).

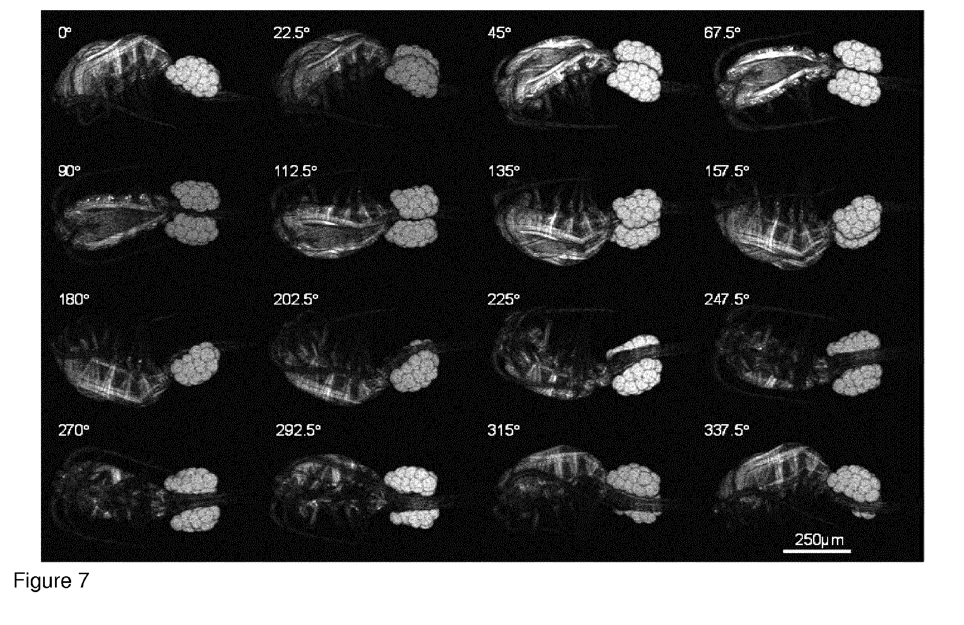

**Figure 7** shows fluorescence z-projection images of 16 single rotation steps of a copepod with egg sac incubated with acridine orange (10 µM, 30 min) taken by confocal laser scanning microscopy (excitation wavelength: 488 nm; fluorescence detected at λ ≥ 505 nm; each z-stack: Δz = 6 µm, 90 images).

### Detailed description of the invention

In a first aspect, the invention relates to a sample holder for a microscope comprising a transparent outer reservoir, and a transparent inner tube, which is arranged in the outer reservoir to be rotatable, wherein an immersion fluid is dispersed between the inner tube and the outer reservoir and the immersion fluid has a refraction index corresponding to the refraction index of the inner tube.

The sample holder is suitable for receiving a sample to be observed and analyzed using a microscope. It may be used for directly observing a specimen e.g. using a binocular or light microscope as well as for detailed analysis or image acquisition, for example using laser scanning microscopy (LSM) or single plane illumination microscopy (SPIM).

In common microscopy, samples are usually embedded between glass slides such that an observation is only possible from one perspective, namely vertical to the glass slide. This exclusively allows the observation and analysis of the specimen's surface, which is facing the microscope's objective. Especially for larger three-dimensional objects an observation of other parts of the object is not possible.

In contrast, the sample holder of the invention allows rotating the object when positioned in the light path of the microscope. The specimen is placed within the inner tube and the sample holder is connected to the microscope such that the specimen is positioned in the light path of the microscope. By rotating the inner tube, the specimen can be observed from any desired perspective vertical to its longitudinal axis, despite that the sample holder is fixed to the microscope. This allows easily changing the perspective of observation with respect to the specimen without the need of removing the sample from the microscope or even changing the embedding of the specimen.

Moreover, since the outer tube can be fixed within the microscope, the rotation of the specimen along its longitudinal axis can be achieved at a defined vertical and horizontal position. This is of particular advantage when taking images from the specimen, because they can be easily put into a defined three-dimensional context, enabling reliable 3D reconstructions of the specimen.

The immersion fluid dispersed between the inner tube and the outer reservoir simultaneously mediates the bearing of the inner tube and maximizes the amount of light passing through the inner tube and reaching the microscope's objective. By using an immersion fluid having a refraction index which is similar to the refraction index of the material of the inner tube, refraction of light passing through the glass/immersion fluid interface is minimized.

The sample holder is suitable for various scientific and commercial applications in which the observation of three-dimensional specimens is vital. For example, using the sample holder, whole embryos can be observed, enabling insight into their development. In tumor research, the sample holder can be used to study cell systems or explants and observe cell infiltration, drug efficiency or the effect of withdrawal of nutrients. Likewise, the effect of substances and drugs used for medical or cosmetic treatments can be analyzed for their effect on tissues, e.g. skin explants. Besides these applications, the sample holder is suitable for presentations during classes in school or university.

In a preferred embodiment, the inner tube has a round cross section. In general, the inner tube may have different geometries, e.g. it may be 4, 8 or 16 edged. However, an inner tube having a round cross section is particularly preferred, because It enables an optimal bearing of the inner tube in the outer reservoir mediated by the immersion fluid. Moreover, the tube may be continuously rotated allowing observation from any possible angle without the risk of light reflections that might occur at the edges of an edged inner tube.

In a preferred embodiment, the inner tube is connected to a device for rotating the inner tube. This device may be manually operated or may be operated by a motor device. By employing a device for rotating the inner tube, a defined and controllable motion of the inner tube can be achieved. Moreover, a shift of the inner tube along the longitudinal axis of the outer reservoir is avoided, which is particularly important during the acquisition of pictures e.g. for 3D reconstruction. In addition, any damage to the inner tube, especially when using small capillaries, is avoided. Manually operated devices may comprise, for example, a rack and pinion for rotating the inner tube. Alternatively, a motor device can be connected to the inner tube, which is preferably operated by a computer or a microcontroller. By the use of such a device predefined positions of the inner tube can be selected and repeatedly set. Additionally, the inner tube can be rotated at a designated, eventually particular low speed. This allows minimizing the forces exerted on the specimen during motion, which may otherwise alter the position of the specimen, or even damage the same.

In a preferred embodiment, the inner tube has an inner diameter of about 200 µm to about 6 mm, preferably of about 400 µm to about 800 µm, of about 1 mm to about 2,5 mm or of about 2 mm to about 5 mm. The size and dimensions of the sample holder and in particular of the inner tube may be selected according to the specimen to be observed and analyzed. For example, for the observation of cells or tissue samples an inner diameter of the inner tube of 400 to 600 µm is preferred. For the observation of larger objects, for example entire insects, an inner diameter of several millimeters is needed.

In a preferred embodiment, the inner tube is sealed, preferably by wax. By sealing the inner tube, the sample can neither leak out nor can it become contaminated. This is of particular importance for the analysis of biological or chemical specimens.

In a preferred embodiment, the inner tube is coated inside with a substance promoting attachment of the specimen to the inner tube. For reliable observations and, in particular, for image acquisition a defined perspective of position of the specimen within the inner tube is advantageous. In common microscopy, the specimen is embedded between two glass slides using a mounting media. Alternatively, the specimen may be embedded in gel-like media e.g. in agarose to prevent it from moving. The later approach is mostly used for living objects such as tissue samples or entire organisms. Gel-like media, however, are not fully transparent and thus impair observation and image acquisition. By coating the inside of the inner tube with a substance to which the specimen spontaneously attaches, a movement of the specimen within the inner tube is avoided. Moreover, the attachment of the specimen to the inner surface of the inner tube ensures that the specimen is rotated together with the inner tube.

In a particularly preferred embodiment, the inner tube is coated inside with a substance selected from the group consisting of organic chemical polymers, proteins and polysaccharides. Biological specimens, in particular living cells in cell cultures, explants or single cell cultures, have the ability to interact with chemical polymers such as proteins and polysaccharides. Such polymers comprise for example fibronectin, poly-lysine, vitronectin, laminin and collagen. These polymers are suitable to mediate the attachment of cells to the inner surface of the inner tube. Moreover, since the polymers promote the direct adhesion of the cells to the inner tube, light refraction due to embedding or culture media between the specimen and the inner tube is minimized.

In a preferred embodiment, the inner tube is connected to a microfluid system. By combining the sample holder of the invention with a microfluid system, the specimen placed within the inner tube can be contacted with any desired compound and the compound's effect throughout the entire specimen observed. Using common 2D microscopy, effects on cells in deeper cell layers of multilayer cell cultures, tissue samples or entire organisms may be missed. In contrast, using the sample holder of the invention the effect of a compound to the specimen can be observed from any desired perspective. For example, a dye or labeled antibody may be added and the distribution observed throughout the entire specimen by rotating the inner tube. In samples comprising different types of cells, a specific interaction of e.g. an antibody or a signaling molecule with a certain type of cell may be observed.

Moreover, the microfluid system is suitable for providing nutrients to a living specimen placed in the inner tube. This allows long time observation of living cultures which can be continuously studied, independently of their three-dimensional expansion, because the entire specimen can be rotated. The microfluid system can also be used for adding pharmaceutical compounds or cytotoxins to cell culture or tissue samples and observing their specific effect online. Since the specimen can be rotated, single cells may be tracked within a cell culture or a tissue sample, which allows the reproduction of the fate of a single cell, providing important insight in cell proliferation, maturation and death.

In a preferred embodiment, the outer reservoir is arranged within the light path of the microscope, such that a plane surface of the outer reservoir is oriented perpendicular to the optical axis of illumination and detection of the microscope. Especially for image acquisition e.g. by LSM or SPIM, an optimal positioning of the specimen in the light path of the microscope is advantageous. Because the sample holder comprises two parts of which only one is movable, the sample holder can be fixed within the microscope. The specimen is rotated by moving the inner tube, while the outer reservoir is stably fixed in the optical axis of the microscope.

In a preferred embodiment, the outer reservoir is a tube having a square cross section. An outer reservoir having a square cross section can be easily positioned and fixed within any microscope. Moreover, having a square cross section, the outer reservoir can be placed within the optical axis of illumination and detection of the microscope, such that the light hits a vertical plane surface minimizing any refraction or reflection of the light, which would impair the optical image.

In a preferred embodiment, the outer tube has an inner diameter, which is adapted to match the outer diameter of the inner tube. For ensuring a controlled movement of the inner tube within the outer tube, the dimensions of both tubes should be adjusted to one another. This means that the inner tube has to be sufficiently smaller to be rotatable within the outer tube. Likewise, the inner tube has to be sufficiently large to stably rotate within the outer tube embedded by the immersion fluid. For example, the inner diameter of the outer tube is up to 100 µm larger, preferably 20 µm to about 100 µm larger, than the outer diameter of the inner tube.

In a preferred embodiment, the outer reservoir and/or inner tube is made of optical glass, preferably soda lime glass, borosilicate glass or silica glass. To enable observation and image acquisition of the specimen, the inner tube and the outer reservoir have to be, at least partially, transparent. For example, the inner tube and/or the outer reservoir may be entirely made of a transparent material. Alternatively, the inner tube and/or the outer reservoir may comprise a window at which the specimen is positioned such that it can be observed using a microscope. The transparent material used for manufacturing the inner tube and/or the outer reservoir may be plastic or glass, and should be fully transparent such that it would not influence the light passing through the outer reservoir, the inner tube and the specimen. Optical glass is a particular preferred material, since it has good optical properties and is specifically adjusted to the optics of microscopes. Within the group of optical glasses, silica glass is particularly preferred for performing fluorescence microscopy, because it allows the passing of UV light, thereby expanding the range of fluorescent dyes towards shorter wavelengths.

In a preferred embodiment, the inner tube is made of a transparent material having a refraction index which differs from the refraction index of the material of the outer reservoir by 0.2 or less, preferably by 0.1 or less, more preferred by 0.05 or less. By having closely similar or even identical refraction indices, light reflection between the inner tube and the outer reservoir is minimized. Moreover, for avoiding impaired optics, the immersion fluid, the inner tube and the outer reservoir have a highly similar or even identical refraction index. For example, they may have refraction indices differing from each other by 0.2 or less, preferably by 0.1 or less, more preferred by 0.05 or less. This minimizes the loss of light when passing through the outer reservoir, the inner tube and the sample. Moreover, for further improving the optics, the material of the inner tube and the outer reservoir as well as the immersion fluid may be selected with respect to the refraction index of the media, in which the specimen is embedded.

In a preferred embodiment, a wall of the outer reservoir and/or the inner tube is about 50 µm to about 1.5 mm thick, preferably about 100 µm to about 500 µm thick, more preferred about 150 µm to 200 µm thick. Most common microscope objectives are adapted to a thickness of a cover slip of 170 µm. Therefore, the thickness of the wall of the inner tube and the outer reservoir should be about 170, µm, when using common microscope objectives. However, depending on the size of the object and of the microscope used, the walls of the inner tube and/or the outer tube may be thicker. To compensate for thicker walls of the inner tube and/or the outer reservoir long distance objectives may be used, which are adapted to a cover glass thickness of up to 2 mm.

In a preferred embodiment, the outer reservoir and/or the inner tube is about 3 to about 20 cm long, preferably between 3 and 10 cm long, more preferred about 5 cm long. According to the size of the specimen and the microscope used, the sample holder of the invention may be provided at various dimensions. For example, larger dimensions may be chosen for sample holders used with a binocular, e.g. for direct observation and/or presentation of a specimen, whereas small dimensions are suitable for sample holders used for more detailed microscopic analysis of cellular specimens.

In a preferred embodiment, the microscope is selected from the group consisting of a stereo microscope, a light microscope, a laser scanning microscopy system, a selective plane illumination microscopy system, a multiphoton microscopy system and an optical imaging system with structured illumination (e.g. ApoTome, Zeiss, Germany). Since the sample holder of the invention does not comprise any complex components, is easily accessible and can be adjusted to various dimensions, it is suitable to be used with different microscopes. For example, the sample holder may be used with a stereo microscope for directly observing and presenting a specimen, as for example for education in school or university. Complex optical microscopes and illumination systems, as for example LSM or SPIM are used for image acquisition and live imaging. The stacks of images acquired e.g. by LSM or SPIM can be used for 3D reconstruction of the specimen. Likewise, the microscopic systems are suitable for live imaging of single cells or tissue samples, or even entire organisms, e.g. xenopus or drosophila larvae. For example, by fluorescently labeling single cells of an explant or organism, the movements of the cells within the body can be followed by rotating the specimen using the sample holder of the invention.

In a preferred embodiment, the immersion fluid has a refraction index close to or identical to the refraction index of the inner tube. To minimize light refraction at the interface of the immersion fluid to the inner tube and/or the outer reservoir, the refraction indices of the immersion oil and the inner tube and/or the outer reservoir are chosen to match each other. The refraction index of the immersion fluid and the inner tube and/or the outer reservoir is considered matching, when the refraction index of the immersion fluid and the inner tube and/or the outer reservoir differs by 0.2 or less, preferably by 0.1 or less, more preferred by 0.05 or less, or is most preferably identical.

In a preferred embodiment, the outer tube is sealed, such that the immersion fluid dispersed between the inner tube and the outer reservoir is enclosed. This avoids leakage or evaporation of the immersion fluid, ensuring constant optical properties of the sample holder.

In a preferred embodiment, the immersion fluid is selected from the group consisting of immersion oil, water, glycerine or immersion gel. The immersion fluid should be highly optically transparent and have low or no fluorescence of its own. Moreover, the immersion fluid may be chosen according to its refraction index to match the refraction index of the inner tube and/or the outer reservoir. A preferable immersion fluid is for example Immersol 518 F (Zeiss, Germany).

In a further aspect, the invention relates to a method for observing a specimen, comprising placing a specimen in an inner tube, placing the inner tube in an outer reservoir, dispersing an immersion fluid, which has a refraction index corresponding to the refraction index of the inner tube, between the inner tube and the outer reservoir, locating the outer reservoir in the light path of a microscope, and rotating the inner tube to observe the specimen at any desired perspective.

Using the method of the invention, a specimen can be comprehensively observed on any desired angle without the need of a rearrangement of the specimen. In common microscopy, for observing a specimen from different perspectives, the specimen needs to be removed from the microscope, brought into a new position and reintroduced into the microscope. Thereby, the position of the specimen with respect to the microscope is lost and any image taken before and after the repositioning can hardly be brought into a reliable context. Moreover, for allowing a repositioning of the specimen, it cannot be embedded using common embedding tools as glass slides, cover slips and optically neutral embedding media. Instead, the specimen has to be embedded in agarose or similar gel-like media, which exhibit rather low transparency or intrinsic fluorescence and, thus, significantly impair imaging of the specimen. In contrast, placing the specimen in an inner tube, which is then placed in an outer tube, such that it is rotatable, allows for turning the specimen without removing it from the microscope. This reduces the risk of alterations or even damage to the specimen and allows reliable data acquisition.

In a preferred embodiment, the specimen is selected from the group consisting of cells, microorganisms, bacteria, fungi, plants, animals, insects, and parts thereof. Since the dimensions of the inner tube and the outer reservoir may be adapted according to the specimen, the method is suitable for observing and analyzing different specimens. Moreover, since it allows the observation of the specimen from different angles, the method is particularly preferred for observation and image acquisition of three-dimensional specimens.

In a preferred embodiment, the specimen is an *in vivo* specimen, preferably a cell, a cell culture, a 3D cell culture, a tissue sample or an organism. The inner tube can easily be sealed or connected to a microfluid system and, therefore, it is suitable for providing a microenvironment in which *in vivo* specimens such as cell cultures and tissue samples can be maintained.

In a preferred embodiment, the method further comprises the step of connecting the inner tube to a microfluid system. This allows the supply of a living specimen with nutrients for long term *in vivo* imaging. Likewise, the microfluid system can be used for applying chemical compounds to a living, dead or inanimate specimen to observe any interactions between the specimen and the compound.

In a preferred embodiment, the method further comprises the step of applying a compound to the specimen, preferably selected from the group consisting of dyes, antibiotics, nutrients, cytostatic drugs and signaling molecules. If the inner tube is accessible from the outside, a compound may be applied to the specimen during observation. Since the specimen can be observed from any desired perspective without the need of embedding the specimen into a gel or other semi-solid media, the compound applied to the specimen can freely distribute. This allows the reliable observation of the distribution and effect of the compound to the specimen. For example, observing live cultures, the response of cells to nutrients, cytostatic drugs or signaling molecules can be studied. Since the specimen can be rotated, the observation is independent from the individual position of a cell within the specimen, and even cells changing their position can be tracked. Likewise, dyes may be applied and their distribution observed throughout a three-dimensional specimen.

In a preferred embodiment, the microscope is connected to an image display system. Image display systems, such as computer screens and beamers, may be directly connected to the microscope for presenting the specimen to a larger audience, as for example in school or university. By rotating the inner tube, the specimen can be observed from all perspectives vertical to its longitudinal axis, thereby giving a comprehensible impression of the specimen.

In a preferred embodiment, the method further comprises the step of acquiring single plane images of the specimen, preferably comprising the step of performing a 3D reconstruction of the specimen. Using LSM, SPIM or an optical imaging system with structured illumination (e.g. ApoTome, Zeiss, Germany), stacks of single plane images through the specimen can be acquired. Thereby, each image presents the fluorescence detected within a single optical plane of the specimen. Using the method of the invention such stacks of single plane images may be taken from any desired perspective. This allows minimizing the loss of information due to the distance between the individual single plane images. The stacks acquired from the different perspectives can then be used to produce a 3D reconstruction of the specimen e.g. using ImageJ software (National Health Institute, Bethesda, Maryland, USA). Acquiring image stacks from different perspectives allows the collection of more data without reducing the distance between the optical planes, which is often limited by the optics of the microscope and, in addition, increases the risk of damages to the specimen, in particular the risk of phototoxicity in live imaging.

In a preferred embodiment, images are acquired from at least 2, preferably at least 4, more preferred at least 8 different perspectives. Because the inner tube is rotatable, images of the specimen can be acquired from any perspective. For generating a representative reproduction of the specimen, preferably a 3D reconstruction, several images from different perspectives are made. The number of images may be adapted to the axial resolution of the microscope.

In a preferred embodiment, the images are acquired using a laser scanning microscopy system, a selective plane illumination microscopy system, a multiphoton microscopy system and an optical imaging system with structured illumination (ApoTome, Zeiss, Germany). The method may be carried out using common microscopes or microscopy systems.

In a preferred embodiment, the specimen is analyzed by use of absorption, luminescence and/or light scattering spectroscopy. Besides common image acquisition, the sample holder of the invention is useful for spectral analysis e.g. measuring absorption, luminescence or light scattering. These analysis techniques specifically provide information of the surface of a specimen, which greatly limits the data that can be acquired using common microscopy. Usually, a specimen is embedded between two glass slides and put into a microscope such that any spectroscopy data can only be acquired from the surface facing the microscope. In contrast, using the sample holder of the invention, the specimen may be rotated within the microscope such that spectroscopic data can be obtained from the entire surface of the specimen. This multiplies the information that can be gained from a single specimen. Since any specimen may be placed in the inner tube, the method is not only suitable for analyzing biological samples but also for spectroscopic analysis of chemical compounds or compositions as well as solid objects as for example pharmaceutical pills, which are often analyzed by chemical imaging.

In a further aspect, the invention relates to a microscope stage adaptor comprising an outer reservoir which is fastened to a retainer, and an inner tube, which is arranged in the outer reservoir to be rotatable, wherein an immersion fluid, which has a refraction index corresponding to the refraction index of the inner tube, is dispersed between the inner tube and the outer reservoir. A microscope stage adaptor is a small platform, which forms part of a microscope, on which a specimen can be mounted for examination. The specimen is placed into the inner tube, such that it can be observed from any desired perspective by rotating the inner tube.

In a preferred embodiment, the stage further comprises a device for rotating the inner tube, preferably a motor device.

In a further aspect, the invention relates to the use of a sample holder for a microscope for obtaining single plane images, preferably for 3D reconstruction, comprising a transparent outer reservoir, and a transparent inner tube, which is arranged in the outer reservoir to be rotatable, wherein an immersion fluid is dispersed between the inner tube and the outer reservoir and the immersion fluid has a refraction index corresponding the refraction index of the inner tube.

### Examples

### Setup for specimen rotation

The sample holder 1 for rotation of 3-dimensional samples can be easily adapted to a great variety of common microscopes. Its setup is depicted in **Figure 1****.** The mounting 7 can be screwed directly onto the x,y-stage of a microscope or adapted to a retainer 11 compatible to common microscope stage adaptors used in modern microscopy.

For fluorescence microscopy two matched micro-capillaries of borosilicate glass are used. The central part of the device consists of an outer glass capillary 2 of rectangular shape with a length of 50 mm, an inner cross section of 600 µm x 600 µm and a wall thickness of 120 µm (VitroTubes, VitroCom Inc., USA). Within this outer rectangular capillary 2 another capillary with a round shape 3 is placed (length: 75 mm, inner diameter: 400 µm, outer diameter: 550 µm). The spacing between inner 3 and outer 2 capillary as well as the inner capillary 3 containing the sample is filled with glycerine as an immersion fluid 20 (depicted in **Figure 3**), which is taken up by capillary forces. Glycerine has a refraction index of n_{589.3nm} = 1.473 which is very similar to the refraction index of the used borosilicate glass (n_{589.3nm} = 1.474). For living specimens, e.g. living cells, a physiological medium (typical refraction index: 1.33-1.37) is used in the inner cuvette instead of glycerine.

The geometry of the inner capillary 3 is matching the size of the specimen 23 (depicted in **Figure 3**), such that a further fixation of the specimen 23 is not necessary. For other applications and specimens, a fixing might be a prerequisite and can be achieved e.g. by appropriate cellular or biochemical adhesion or embedding gels (like Phytagel, Agarose).

The outer rectangular capillary 2 is clamped at both sides to the mounting 7 permitting optical access for detection from below by a microscope objective 8 (**Figure 1**). Furthermore the clamping 4 prevents displacement during the measurement and supports the rotation of the inner capillary 3 along the rotational axis without tension.

For rotation of the inner capillary 3 a computerised stepping motor 5 with microstep positioning control (Nema 8 - ST2018S0604-A, SMC11, Nanotec Electronic GmbH & Co.KG, Germany) with an angular resolution of 1.8° (200 increments in full-step mode) is used. This resolution can be reduced to 0.1125° without further gear modifications (resulting in 3200 increments in 1/16-step mode). A bare fibre holder with delrin jaws 6 (FPH-SR, Newport Corporation, USA) for strain relief is adapted to the shaft of the stepping motor holding the inner round capillary 3 with radial symmetry to the motor shaft. The complete device is attached to the microscope (Axiovert 200, Carl Zeiss Jena, Germany).

### Microscopy methods

The sample holder for the rotation of 3-dimensional samples supports a wide range of common microscopy techniques including epi-illumination and transillumination.

### Single plane illumination microscopy (SPIM)

At single plane illumination microscopy (SPIM) a light sheet is created perpendicular to the observation path either by a cylindrical lens or by scanning of a laser beam (Huisken and Stainier 2009; Santi 2011). SPIM is characterized by the fact that only the plane under investigation is exposed to light, and successive measurements can be performed at low exposure of the whole sample when either the light sheet or the sample is shifted in axial direction (**Figure 3** **A**).

For illumination of the sample, a collimated 470 nm laser diode (LDH 470 with driver PDL 800-B, PicoQuant, Germany) is used. The collimated laser beam is expanded by a telescope, focused by a cylindrical lens and deflected onto the specimen by a 90° mirror. With a numerical aperture NA = 0.08 the waist of the illumination light sheet can be limited to about 5-10 µm along the specimen. The light sheet 21 and the microscope objective 8 can be moved simultaneously in vertical direction, and all planes of the specimen are imaged without re-adjustment of the microscope.

Fluorescence is commonly detected by a 10x/0.30 or a 20x/0.50 microscope objective and a long pass filter for λ ≥ 515 nm (integrated within the microscope) and recorded by an integrating CCD camera (e.g. AxioCam MRc with software AxioVision 4.8.2, Carl Zeiss Microlmaging GmbH, Germany).

### Confocal laser scanning microscopy (CLSM)

For illumination of the samples, a Pascal 5 laser scanning head (Carl Zeiss Jena, Germany) equipped with an argon ion laser operated at 488 nm is used. The laser beam is focused by the microscope objective 8 into the sample plane 22 and shifted by the scanning head to generate a 2-dimensional image (**Figure 3** **B**). By moving the microscope objective in vertical direction one can thus generate a 3-dimensional dataset (optical sectioning).

Fluorescence is commonly detected by a 10x/0.30 or a 20x/0.50 microscope objective, as well as a long pass filter for λ ≥ 505 nm and recorded by a photomultiplier tube. With a pinhole adjusted to 80% of an Airy disk, layers of 10 µm diameter or less are again selected.

### Data acquisition

**Figure 4** depicts an example of data acquisition for both microscopy methods presented. At a given rotational position, 2-dimensional images of different layers are recorded by shifting the image plane by fixed increments (usually 5 to 10 µm) resulting in a z-stack of images. Then, the inner capillary holding the specimen is rotated by a well-defined angle (e.g. 45° or 22.5° resulting in 8 or 16 increments of a full circle), and another z-stack is taken. Therefore, 3-dimensional stacks from multiple angles (views) are collected.

The individual stacks can be either linked to each other (multi-view registration) and fused (content-based multi-view fusion) to one 3-dimensional rendered output image or calculated separately projecting an image stack along the axis perpendicular to the image plane (z-projection). For ease of exposition all results presented here are related to calculated z-projections of the individual data sets.

### Specimens and preparation

Copepods belong to the group of small crustaceans resident in sea water as well as in fresh water. They put the main disposal of marine zooplankton and play therefore an important role within the marine food chain. Copepods are typically 0.2 to 2 mm long and have a teardrop-shaped body with an armored exoskeleton and large antennae. They possess a single median compound eye, and the thorax has up to five segments, each with limbs. The narrow abdomen contains five segments without any appendages. Copepods do not have any heart or circulatory system.

Ticks are small arachnids in the order of lxodida. Along with mites, they constitute the subclass Acarina. Ticks are ectoparasites (external parasites), living by hematophagy on the blood of mammals, birds, and sometimes reptiles and amphibians. They are vectors of a number of diseases. Ixodida ticks undergo three primary stages of development: larval, nymphal, and adult. Within the larval state they have a size of 500 µm x 400 µm and possess six legs (compared to eight legs for the further states).

For fluorescence staining of the copepods the nucleic acid selective fluorescent dye acridine orange was used. The copepods were immobilized and incubated in a 70% ethanol solution with 10 µM acridine orange for 30 min. The ixodida ticks were also immobilized in a 70% ethanol solution without staining. The stained copepods and the unstained ixodida ticks were washed afterwards in glycerine and injected into the round capillary 3.

By use of capillary forces the outer rectangular capillary 2 is filled with glycerine likewise. The round capillary 3 with the specimen 23 is finally placed within the rectangular capillary 2 and attached with radial symmetry to the motor shaft. The outer capillary 2 is then fixed to the mounting 7.

Images of the copepod were acquired using single plane illumination microscopy (SPIM) (**Figures 5** **and** **6**) and confocal laser scanning microscopy (CLSM) (**Figure 7**).

### References

Huisken J, Stainier DY; Selective plane illumination microscopy techniques in developmental biology. Development. 2009 Jun;136(12):1963-75.
Santi PA; Light sheet fluorescence microscopy: a review. J Histochem Cytochem. 2011 Feb;59(2):129-38.

## Claims

1. A sample holder (1) for a microscope comprising
- a transparent outer reservoir (2), and
- a transparent inner tube (3), which is arranged in the outer reservoir (2) to be rotatable,
wherein an immersion fluid (20) is dispersed between the inner tube (3) and the outer reservoir (2) and the immersion fluid (20) has a refraction index corresponding to the refraction index of the inner tube (3).

2. The sample holder (1) of claim 1, wherein the inner tube (3) has a round cross section.

3. The sample holder (1) of claim 1 or 2, wherein the inner tube (3) is connected to a device for rotating the inner tube (3), preferably a rack and pinion or a motor device (5).

4. The sample holder (1) of any preceding claim, wherein the inner tube (3) has an inner diameter of about 200 µm to about 6 mm, preferably of about 400 µm to about 800 µm, of about 1 mm to 2,5 mm or of about 2 mm to about 5 mm.

5. The sample holder (1) of any preceding claim, wherein the inner tube (3) is connected to a microfluid system.

6. The sample holder (1) of any preceding claim, wherein the outer reservoir (2) is a tube having a square cross section.

7. The sample holder (1) of any preceding claim, wherein the immersion fluid (20) has a refraction index close to or identical to the refraction index of the inner tube (3).

8. A method for observing a specimen (23), comprising
- placing a specimen (23) in an inner tube (3),
- placing the inner tube (3) in an outer reservoir (2),
- dispersing an immersion fluid (20), which has a refraction index corresponding to the refraction index of the inner tube (3), between the inner tube (3) and the outer reservoir (2),
- locating the outer reservoir (2) in the light path of a microscope, and
- rotating the inner tube (3) to observe the specimen (23) at any desired perspective.

9. The method of claim 8, wherein the specimen is an *in vivo* specimen, preferably a cell, a cell culture, a 3D cell culture, a tissue sample or an organism.

10. The method of claim 8 or 9, wherein the method further comprises the step of connecting the inner tube (3) to a microfluid system.

11. The method of claims 8 to 10, wherein the microscope is connected to an image display system.

12. The method of claims 8 to 11, wherein the method further comprises the step of acquiring single plane images of the specimen, preferably further comprising the step of performing a 3D reconstruction of the specimen.

13. The method of claims 8 to 12, wherein the specimen is analyzed by use of absorption, luminescence and/or light scattering spectroscopy.

14. A microscope stage adaptor (10) comprising
- an outer reservoir (2), which is fastened to a retainer (11), and
- an inner tube (3), which is arranged in the outer reservoir (2) to be
rotatable,
wherein an immersion fluid (20), which has a refraction index corresponding to the refraction index of the inner tube (3), is dispersed between the inner tube (3) and the outer reservoir (2).

15. Use of a sample holder (1) according to claim 1 for obtaining single plane images, preferably for 3D reconstruction.
